# EUROPEAN PATENT APPLICATION

(11) **EP 1 231 168 A1**
(43) Date of publication of application: **14.08.2002**
(21) Application number: 01127276.2
(22) Date of filing: 16.11.2001
(51) Int. Cl.: B65G 47/22, B65G 47/244

(54) **Line for conveying a panel of wood or similar**

(30) Priority: 17.11.2000 IT BO000665
(71) Applicant: ISP Systems S.r.l., 61100 Pesaro (IT)
(72) Inventor: Bernardi, Paolo, 40138 Bologna (IT)
(74) Representative: Franzolin, Luigi

(57) **Abstract**

A panel (2) of wood or similar is conveyed along a path (P) perpendicular to a substantially flat end face (6b) of the panel (2) by means of at least two conveyors (8) parallel to each other and movable independently of each other; control means (18) being provided to selectively control operation of the two conveyors (8) so that the end face (6b) is maintained perpendicular to the path (P) along substantially the whole path (P).

## Description

The present invention relates to a line for conveying a panel of wood or similar.

More specifically, the present invention relates to a line for conveying a panel of wood or similar to a cutting station of a cutting machine, to which the following description refers purely by way of example.

Known cutting machines normally comprise a cutting station; at least one conveyor belt for feeding the panel along a given path to the cutting station; and cutting means for cutting the panel perpendicular to the traveling direction of the panel along the path.

The panel is normally substantially parallelepiped-shaped with a substantially rectangular section, and must be fed to the cutting station in a cutting position in which its longitudinal axis is parallel to the traveling direction.

Known cutting machines of the type described above have the major drawbacks of dust and chips in the workplace producing different friction coefficients at different contact areas between the panel and the conveyor belt, and of the panel being subjected, along said path, to severe vibration due to the structure of the conveyor belt.

As a result, the panel normally reaches the cutting station in other than the desired cutting position.

Known cutting machines of the type described above are therefore relatively complex and expensive, by having to be equipped, at the cutting station, with aligning means for setting the panel in the correct cutting position.

It is an object of the present invention to provide a line for conveying a panel of wood or similar, designed to eliminate the aforementioned drawbacks.

According to the present invention, there is provided a line for conveying a panel of wood or similar having a substantially flat end face, the line comprising first conveying means for feeding said panel in a first direction and along a path, both substantially perpendicular to said face; and being characterized in that said first conveying means comprise at least two conveyors parallel to each other and movable independently of each other; the line also comprising control means for selectively controlling operation of said conveyors to keep said face perpendicular to said path along substantially the whole path.

A non-limiting embodiment of the present invention will be described by way of example with reference to the accompanying drawings, in which:
Figure 1 shows a schematic view in perspective of a preferred embodiment of the line according to the present invention;
Figure 2 shows a block diagram of an electronic central control unit for controlling the Figure 1 line;
Figure 3 shows a schematic plan view of the operating principle of the Figure 1 line.

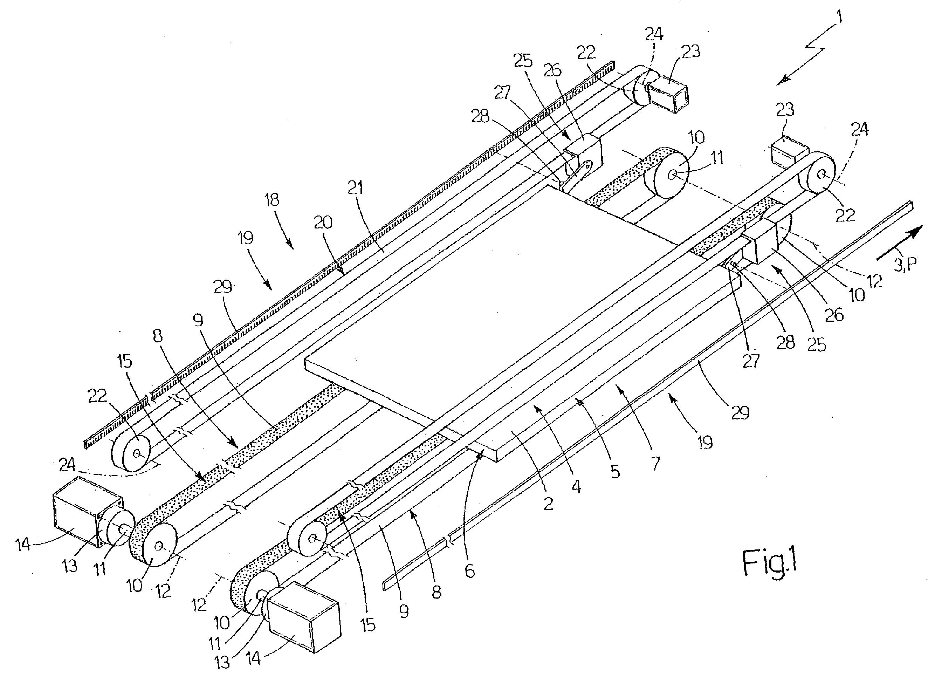

Number 1 in Figure 1 indicates as a whole a line for conveying a panel 2 of wood or similar along a given path P and in a given direction 3. Panel 2 is substantially parallelepiped-shaped, and has two parallel major lateral faces 4; two minor lateral faces 5 parallel to each other and perpendicular to faces 4; and two minor lateral faces 6 parallel to each other and perpendicular to faces 4 and 5.

Line 1 comprises a conveying device 7, in turn comprising, in the example shown, two endless conveyors 8 having respective belts 9 movable in respective vertical planes parallel to each other and to direction 3. Each belt 9 is looped about two pulleys 10 fitted to respective supporting shafts 11 mounted to rotate about respective longitudinal axes 12 substantially perpendicular to direction 3, and one of which is connected in angularly-fixed manner, via the interposition of a reducer 13, to the output shaft (not shown) of a motor 14 (in the example shown, an electric brushless motor) for rotating shaft 11 about respective axis 12.

The two belts 9 have respective coplanar top conveying branches 15 defining a conveying surface, on which panel 2 is positioned with a bottom face 4 contacting branches 15, with faces 5 parallel to direction 3, with one face 6 (hereinafter indicated 6a) located frontwards in direction 3, and with the other face 6 (hereinafter indicated 6b) located rearwards in direction 3.

In a variation not shown, line 1 has a succession of pressure rollers located between the two conveyors 8 to engage the top face 4 of panel 2 and so improve the stability of panel 2 on belts 9.

Line 1 also comprises a control unit 18, in turn comprising a number of control devices 19 equal to the number of conveyors 8. Each device 19 comprises an endless conveyor 20 having a belt 21 movable in a vertical plane substantially parallel to direction 3, and looped about two pulleys 22 - one of which is powered by a motor 23 (in the example shown, an electric brushless motor) - mounted to rotate about respective axes 24 substantially parallel to axes 12.

Each device 19 also comprises a control member 25, in turn comprising a supporting carriage 26, which is fitted to respective belt 21, supports a touch rod 27 contacting, in use, face 6b of panel 2, and has a sensor 28 (in the example shown, an optical or magnetic sensor) whose position along path P is recorded on a respective metric scale 29 extending along path P.

In connection with the above, it should be pointed out that:
along path P, the two rods 27 contact different portions of face 6b; and
each motor 23 is a torque-controlled motor, which maintains substantially constant contact pressure between respective rod 27 and panel 2 along the whole of path P, regardless of the motion of panel 2 along path P.

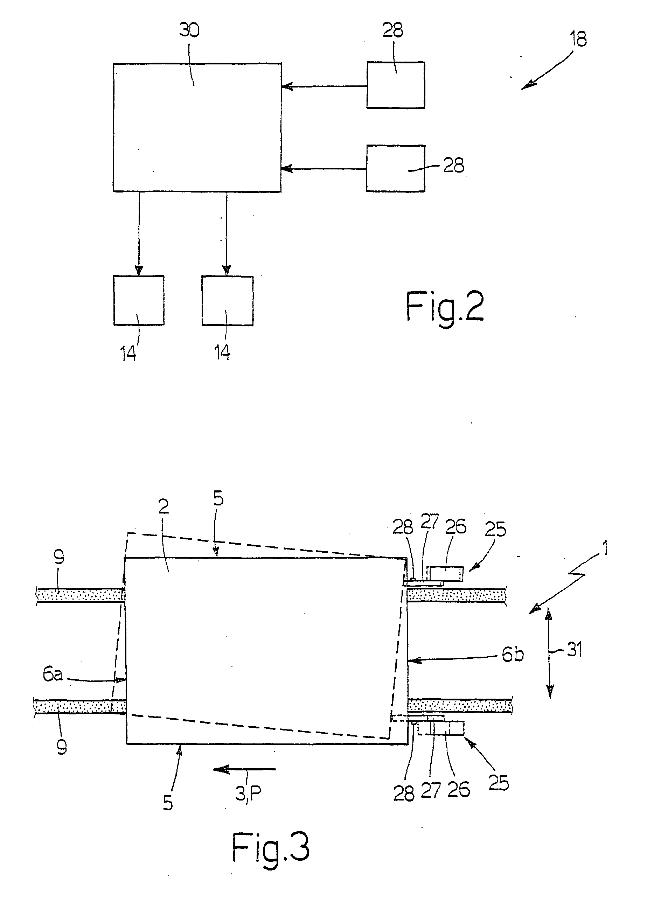

With reference to Figure 2, unit 18 comprises an electronic central control unit 30, which receives and compares the position signals from the two sensors 28, and selectively controls operation of the two motors 14 to keep the two sensors 28 aligned with each other in a direction 31, substantially perpendicular to direction 3, along the whole of path P.

With reference to Figure 3, in actual use, the position of panel 2 with respect to direction 3 may vary due to varying friction conditions between panel 2 and each of belts 9, and/or to vibration to which panel 2 is subjected by the flexible structure of conveyors 8.

Since constant contact pressure is maintained between both rods 27 and face 6b, the two sensors 28 move out of line with each other in direction 31 when faces 6 are positioned forming an angle of other than 90° with direction 3.

In which case, electronic central control unit 30 controlling line 1 receives two different position signals, one for each of the two sensors 28, and therefore commands at least one of motors 14 to accelerate or decelerate respective conveyor 8 to realign the two sensors 28 in direction 31, i.e. so that faces 5 and 6 are once more parallel and perpendicular to direction 3 respectively.

## Claims

1. A line for conveying a panel (2) of wood or similar having a substantially flat end face (6b), the line comprising first conveying (7) means for feeding said panel (2) in a first direction (3) and along a path (P), both substantially perpendicular to said face (6b); and being **characterized in that** said first conveying means (7) comprise at least two conveyors (8) parallel to each other and movable independently of each other; the line also comprising control means (18) for selectively controlling operation of said conveyors (8) to keep said face (6b) perpendicular to said path (P) along substantially the whole path (P).

2. A line as claimed in Claim 1, wherein said face (6b) is located rearwards in said first direction (3).

3. A line as claimed in Claim 1 or 2, wherein said control means (18) comprise a number of control devices (19) equal to the number of said conveyors (8).

4. A line as claimed in Claim 3, wherein each said control device (19) comprises at least one control member (27, 28) contacting, in use, a respective portion of said face (6b); and fixed reference means (29) located along said path (P) to determine the position of the relative control member (27, 28) along the path (P).

5. A line as claimed in Claim 4, wherein said control means (18) comprise further control means (30) for adjusting the traveling speed of at least one of said conveyors (8) when, in use, said control members (27, 28) are misaligned in a second direction (31) substantially perpendicular to said first direction (3).

6. A line as claimed in Claim 4 or 5, wherein each said control device (19) comprises a further conveyor (20) for moving the respective control member (27, 28) along said path (P); said further conveyor (20) being selectively controllable to maintain a substantially constant contact pressure between the respective said control member (27, 28) and said panel (2) along the whole of said path (P).

7. A line as claimed in any one of the foregoing Claims, wherein said control means (18) comprise an optical or magnetic sensor (28) for each said conveyor (8).

8. A line as claimed in any one of the foregoing Claims, wherein said panel (2) is substantially parallelepiped-shaped with a substantially rectangular section, and has two said faces (6a, 6b) perpendicular to said path (P), and two further faces (5) parallel to the path (P).
